Europäisches Patentamt

European Patent Office

Office européen des brevets

(11) Publication number: **0 155 133**
**A2**

## EUROPEAN PATENT APPLICATION

(21) Application number: **85301485.0**

(22) Date of filing: **04.03.85**

(51) Int. Cl.⁴: **G 06 F 15/21**

(30) Priority: **03.03.84 GB 8405652**

(43) Date of publication of application: **18.09.85**
**Bulletin 85/38**

(84) Designated Contracting States: **AT BE CH DE FR GB IT LI LU NL SE**

(71) Applicant: **Eildon Electronics Limited, Gala Mill Huddersfield Street, Galashiels TD1 3AY (GB)**

(72) Inventor: **Strathie, Richard Thomas, Weather Cote Rig, Gatton Side Melrose (GB)**
Inventor: **Dixon, Alexander Francis Hart, Brunsfield 50 Abbotsford Road, Galashiels (GB)**

(74) Representative: **Pacitti, Pierpaolo Alfonso M.E. et ai, Ian G. Murgitroyd and Company 49 Bath Street, Glasgow G2 2DL (GB)**

(54) **Manufacturing control system.**

(57) There is described a manufacturing control system which has the ability to connect together a number of data collection devices to form an integrated manufacturing control system. The system includes a control computer which receives and processes data obtained from the data collection devices, said data being parameters of a manufacturing process.

ACTORUM AG

"Manufacturing Control System"

Background of the Invention

This invention relates to a manufacturing control system.

More particularly, the invention relates to a manufacturing system which has the ability to connect together a number of data collection devices to form an integrated manufacturing control system.

The control system of the invention has been designed to be low cost, with the in-built flexibility required to suit most manufacturing operations. The system can start with one data collection device only and build to a complete integrated system capable of collecting automatically, from bar coded labels, the information required for complete manufacturing control.

Of prime importance is the ability to collate and present at each level, such as operators, supervisors, production control, accounts and management, the information required by these personnel to enable them to improve their performance.

Summary of the Invention

According to the present invention there is provided a manufacturing control system comprising a control computer adapted to receive and process data obtained from a number of data collection devices, said data being parameters of a manufacturing process.

Brief Description of the Invention

Embodiments of the present invention will now be described, by way of example, with reference to the accompanying drawings, in which:

Fig. 1 is a block diagram of a manufacturing control system of the present invention; and
Fig. 2 is a block diagram of the data collection devices.

Description of Preferred Embodiments

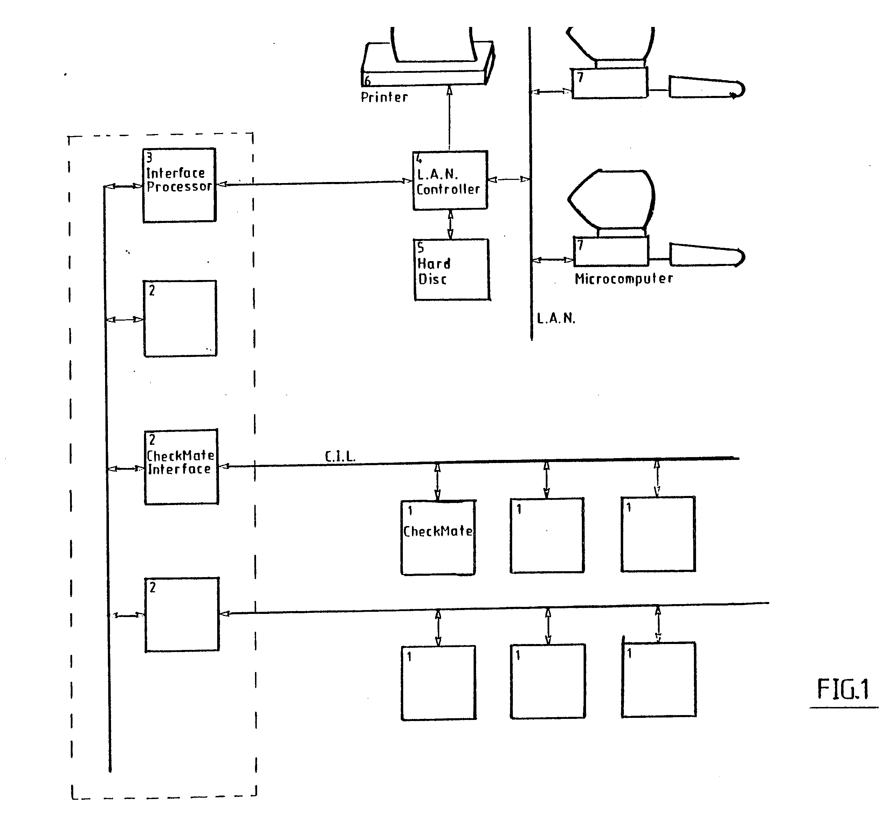

Referring firstly to Fig. 1, the elements of a manufacturing control system of the present invention are illustrated.

The system comprises an interface loop (C.I.L.) for supplying power and communications to a plurality of data collection devices 1. Up to 127 data collection devices can be connected together on one interface loop and power is supplied in the form of unregulated D.C. of approximately 35 volts. The communications is to RS 422 standards over twisted pairs of wires to provide high common mode noise immunity to the data transmitted. The data is encoded in Manchester phase code to provide further data security, and each data message carries its own individual checksum for data integrity.

The interface loop communicates with a interface unit 2 which converts the information on the interface loop, from Manchester phase encoding to binary and vice versa. The interface 2 also regulates the power supplied to the interface loop (C.I.L.) and gives warning in the event of a line fault.

Signals from the interface units 2 are passed to an interface processor 3 which checks the address and integrity of the messages received from the data collection devices 1 and re-transmits the message in serial ASCII to the local area network controller (L.A.N.) 4. Messages received in serial ASCII from L.A.N. 4 are routed via the interface processor 3 to to the correct interface unit 2 and the message checksum is computed and added to the message.

The L.A.N. controller 4 is a device for controlling a network of microcomputers and takes the form of a specially programmed microcomputer with a network controller.

The system includes also a hard disc unit 5 to provide storage of information generated and required by the data collection devices 1. Also, a system printer 6 is provided to generate printed reports when required by the control system.

A number of microcomputer terminals 7 are connected to the L.A.N. controller 4 to give access to the data and reports generated by the control system, and to perform general computing functions.

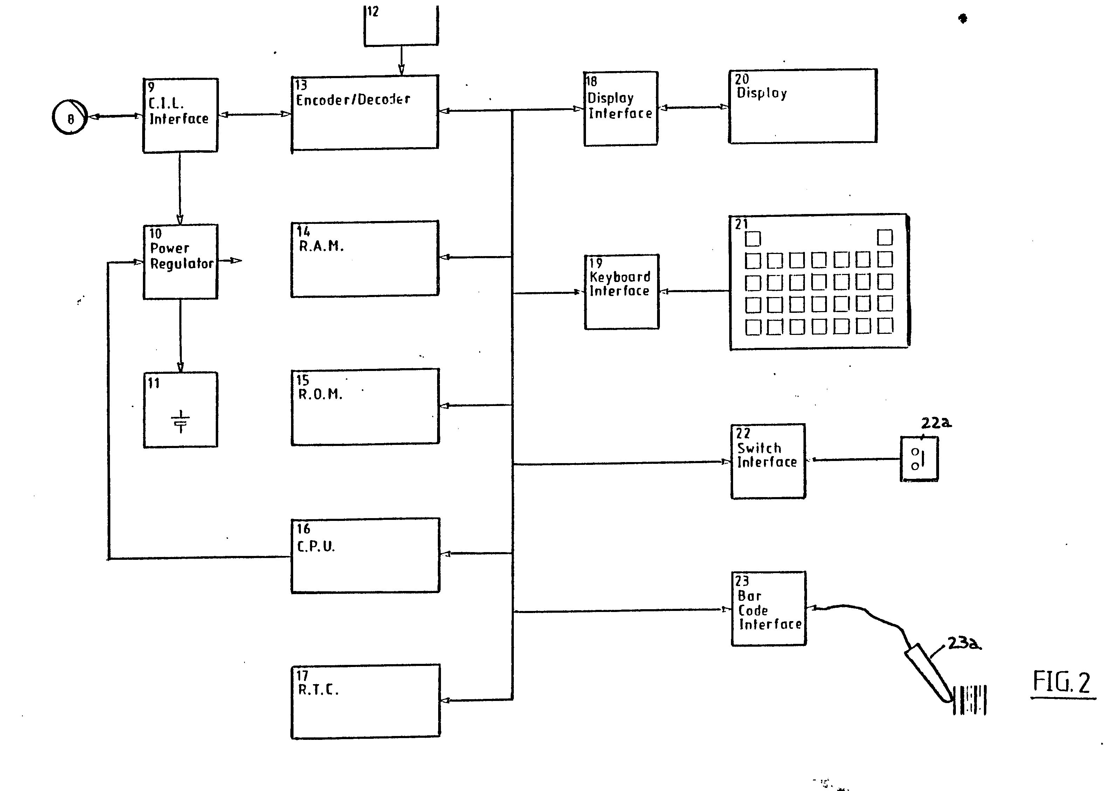

Referring now to Fig. 2 there will now be described the elements of the data collection devices 1 of the control system of Fig. 1.

A C.I.L. interface 9 which communicates with the main system through a line termination 8 separates the power and the communications from the C.I.L. and converts the communications from RS422 standard to D.C. levels, and vice versa.

The various elements of the system are supplied with power from a power regulator 10 which regulates the power drawn from the C.I.L. by the data collection device 1 and converts the power to a regulated supply for the data collection device 1 and the charging of back-up batteries 11. The power regulator 10 senses when a device processor unit 16 is not busy and reduces the voltage supplied to the data collection device 1 to conserve power.

The back-up batteries 11 provide power to the data collection device 1 when it is operating in the 'stand alone' mode, or in the event of a line fault on the C.I.L. The batteries also preserve the working data stored in the data collection device when the data collection device is in the 'OFF' mode.

Each data collection device 1 has a unique address on the C.I.L., and an encoder/decoder unit 13 only responds to information that carries an address that matches this address. Similarly, information transmitted from the data collection device 1 has the data collection device address added by the encoder/decoder unit 13. This address is set by bit switches.

When the data collection device is receiving information the encoder/decoder unit 13 checks the address of the information and if correct, converts it from Manchester phase encoding to data on the data collection device data bus. When the data collection device is transmitting information the encoder/decoder unit 13 takes data from the data collection device data bus and encodes it in Manchester phase code and adds the data collection device address.

Each data collection device 1 is provided with a Random Access Memory (R.A.M.) 14 which provides working storage for the data collection device data and a Read Only Memory (R.O.M.) 15 which holds the program for the device processor unit 16 which controls all the data collection device operations.

Further, the data collection device has a real time clock 17 which keeps track of the time of day, and provides time dependent interrupts for the device processor unit 16.

Data is passed to and from the data collection device data bus to a display 20 via a display interface 18 under control of the device processor unit 16.

A keyboard 21 provides for operator input to the data collection device and communicates with the data collection device data bus through a keyboard interface 19.

Two additional interfaces are provided. The first, an external switch interface 22, senses the operation of an external switch 22a used by the operator to input data to the data collection device and second interface, a bar code interface 23, enables a bar code wand 23a to be connected to the data collection device for the reading of bar codes which hold production information.

The data collection device shown in Fig. 2 is self-contained and battery operated and has the following functions available in the 'stand alone' mode:-

(a)   Entry and Storage of Operator Number.

(b)   Entry and Storage of Standard Minute Value for
      Operation.

(c)   Entry and Storage of Earnings per Standard Hour.

(d)   Entry and Storage of Earnings per OFF Standard Hour.

(e)   Entry and Storage of Batch Indentification Number.

(f)   Entry and Storage of Batch Quantity.

(g)   Entry and Storage of Batch Standard Minute Value.

(h)   Calculation and Display of Actual Production Units,
      Target Production Units, and Production Performance
      Percentage based on Production Units.

(i)   Calculation and Display of Actual Production Time,
      Target Production Time, and Production Performance
      Percentage based on Production Time.

(j)   Calculation and Display of Average Earnings per Hour.

(k)   Calculation and Display of Average Earnings per Minute.

(l)   Calculation and Display of Total Earnings.

(m)   Calculation and Display of Total Attended Minutes.

(n)   Calculation and Display of Total ON Standard Minutes.

(o)   Calculation and Display of Total ON Standard Minutes as a Percentage of Total Attended Minutes.

(p)   Calculation and Display of Total OFF Standard Minutes.

(q)   Calculation and Display of Total OFF Standard Minutes as a Percentage of Total Attended Minutes.

(r)   Calculation and Display of OFF Standard Minutes for ten individual reasons.

(s)   Display of any individual Entry Function.

When incorporated in the system of the invention as shown in Fig. 1 the data collection device has the following functions available:-

(a)   Communication of all the above data to a central location for subsequent analysis on a microcomputer.

(b)   Display of time of day.

(c)   Interpretation of bar coded labels which contain batch identification number, batch quantity, and batch standard minute value.

(d)   Display of messages originated from the central microcomputer for operator guidance and information.

(e)   Routing information for an automatic materials handling system.

The manufacturing control system of this invention offers an integrated system with all the following features:-

8

(a)   On line, real time production and stock information
      collected at a central point.

(b)   Motivational information presented to the production.
      operator at the work station.

(c)   Integrated stock control system.

(d)   The individual data collection devices operate in a
      'stand alone' mode and the system can be built up on a
      modular basis.

Modifications and improvements may be incorporated without
departing from the scope of the invention.

CLAIMS

1.   A manufacturing control system comprising a control computer adapted to receive and process data obtained from a number of data collection devices, said data being parameters of a manufacturing process.

2.   A system as claimed in claim 1, wherein said data collection devices are each provided with an interface for communication with the control computer.

3.   A system as claimed in claim 1, wherein said collection device is provided with an encoder/decoder unit in order that tha data from said data collection device may include a device address signal.

4.   A system as claimed in claim 1, wherein each data collection device is provided with a central processor unit and memory unit.

5.   A system as claimed in claim 1, wherein said data collection devices collect manufacturing data through a bar code reader communicating with the device through an interface unit.

6.   A manufacturing control system substantially as hereinbefore described with reference to the accompaning drawings.

FIG.1

0155133

FIG. 2